Europäisches Patentamt

European Patent Office

Office européen des brevets

(11) Publication number: **0 113 377**
**B1**

# EUROPEAN PATENT SPECIFICATION

(45) Date of publication of patent specification: **19.04.89**

(51) Int. Cl.⁴: **G 02 B 6/44**

(21) Application number: **83902127.6**

(22) Date of filing: **05.07.83**

(86) International application number:
**PCT/JP83/00213**

(87) International publication number:
**WO 84/00216 19.01.84 Gazette 84/02**

(54) COATED OPTICAL FIBER.

(30) Priority: **05.07.82 JP 101632/82 u**
**25.02.83 JP 26831/83 u**

(43) Date of publication of application:
**18.07.84 Bulletin 84/29**

(45) Publication of the grant of the patent:
**19.04.89 Bulletin 89/16**

(84) Designated Contracting States:
**DE FR GB SE**

(56) References cited:
**EP-A-0 106 548**
**DE-A-2 533 144**
**DE-A-2 825 845**
**FR-A-2 319 139**
**JP-A-52 018 339**
**JP-A-52 046 824**
**JP-A-55 064 203**
**JP-A-57 013 407**
**JP-A-57 027 204**
**JP-A-58 018 607**
**JP-U-57 164 702**
**US-A-4 113 349**
**US-A-4 169 657**
**US-A-4 221 591**
**US-A-4 239 335**

(73) Proprietor: **THE FURUKAWA ELECTRIC CO.,
LTD.**
**6-1, 2-chome, Marunouchi Chiyoda-ku**
**Tokyo (JP)**

(72) Inventor: **FUSE, Kenichi Furukawa Electric Co.,
Ltd.**
**Chiba Electric Cable Factory 6, Yahata
Kaigandori**
**Ichihara-shi Chiba Pref. 290 (JP)**
Inventor: **SHIRASAKA, Yusei Furukawa Electric
Co., Ltd.**
**Chiba Electric Cable Factory 6, Yahata
Kaigandori**
**Ichihara-shi Chiba Pref. 290 (JP)**

(74) Representative: **Austin, Hedley William et al**
**A.A. THORNTON & CO. Northumberland House**
**303-306 High Holborn**
**London WC1V 7LE (GB)**

Courier Press, Leamington Spa, England.

## Description

The present invention relates to a coated optical fibre having a reinforced coating layer formed of fibre reinforced plastics (FRP) around the outer periphery of the optical fibre, and also an additional layer for improving the mechanical and light transmission characteristics (which will be merely termed "transmission characteristics") is interposed between the optical fibre and the FRP coating layer.

More particularly the invention relates to a coated optical fibre as defined in the first part of claim 1. Such coated optical fibre is already known from JP—A—57/27204.

Generally a coated optical fibre has its strands coated with: a primary coated layer and a buffer layer; or a buffer layer used also as the primary coated layer; and a reinforced coating layer on the outer periphery of the buffer layer.

The reinforced coating layer is generally formed of an FRP, which improves the mechanical characteristics of the coated optical fibre but also increases the transmission loss upon variation in temperature more than with a nylon coated optical fibre.

The above-described FRP reinforced coating layer (which will be termed "a FRP layer") is, as already known, composed of a glass fibre reinforcing material disposed along the longitudinal direction of the optical fibre, impregnated with thermosetting resin and cured.

However, the FRP layer has one disadvantage, namely that when a compression force, twisting, or bending is exerted on the FRP layer from the side, the layer is deformed in a direction that the annular shape of the layer is flattened so that a longitudinal crack may occur.

This is due to the buffer layer, which is soft and cannot prevent this flattening effect, with the result that the longitudinal crack of the FRP layer is produced.

In addition, in case of the coated optical fibre with an FRP layer, there is still room for improvement in the transmission characteristics.

Furthermore, the surface of the reinforced coating layer is planed or split when the reinforced coating layer is formed only of the reinforced fibrous material and the thermosetting resin, thereby exhibiting an improper external appearance.

Such problems in the external appearance have been overcome by including inorganic filler such as calcium carbonate or short glass fibres (having particle diameter above 100 um) in the reinforced coating layer, thereby stabilising at the time of forming the coating layer. However, it has been found that conventional optical fibres having this filler-containing reinforced coating layer have reduced transmission characteristics at a temperature range of 100 to 150°C.

An object of this invention is to prevent the aforementioned longitudinal crack and also to give high transmission characteristics as well as improved external appearance.

The coated optical fibre of the present invention is characterised in that said additional resin layer is bonded to said reinforced coating layer, and in that said reinforced coating layer also comprises particles of a filler, which are composed of an inorganic material and have a diameter of less than 30 μm, or are composed of a thermoplastic material having a softening temperature of 120°C or less and have a diameter of less than 50 μm.

The separate resin layer supports the reinforced coating layer and reduces deformation of said reinforced coating layer. Thus, the mechanical characteristics can be improved, and the rate of producing the aforementioned longitudinal crack can be reduced.

Since microbends of the optical fibre caused by the presence of the reinforced coating layer can be prevented by the resin layer, the coated optical fibre has high transmission characteristics.

The suitably selected particles of filler also contribute to improve said transmission characteristics, as well as the external appearance.

Embodiments of the present invention will now be more particularly described by way of example and with reference to the accompanying drawings, in which:

Figure 1 is a sectional view showing the representative construction of one embodiment of a coated optical fibre;.

Figure 2 is a sectional view of another embodiment of coated optical fibre;

Figure 3 is an enlarged sectional view of the reinforcing fibre material; and

Figures 4 and 5 are explanatory views showing schematically methods of fabricating the coated optical fibre.

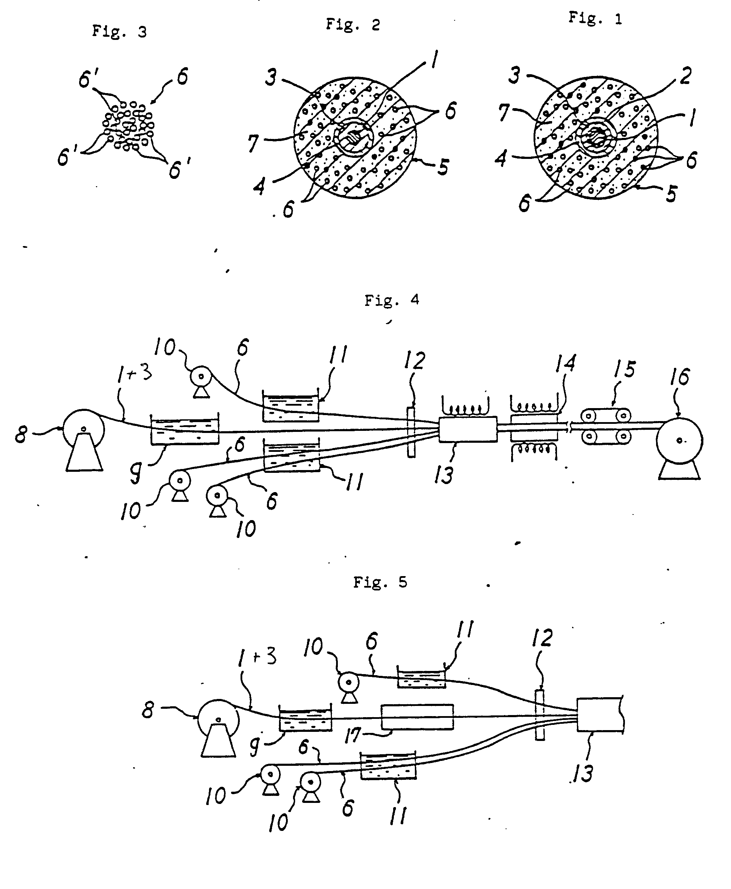

In Figures 1 and 2, reference numeral 1 designates an existing quartz optical fibre formed of a core and a clad. In Figure 1, a primary coating layer 2 and a buffer layer 3 of silicone resin or the like are formed on the outer periphery of the optical fibre 1. These two layers 2 and 3 may be combined, both being formed of the same substance, as in Figure 2, where the buffer layer 3 is used also as the primary coating layer.

Reference numeral 4 denotes a resin layer formed on the outer periphery of the buffer layer 3, and 5 designates a reinforced coating layer formed on the outer periphery of the resin layer 4. The resin layer 4 is therefore interposed between the buffer layer 3 and the reinforced coating layer 5 in the laminar structure as shown.

The reinforced coating layer 5 is formed of long reinforcing fibre materials 6, and thermosetting resin 7.

The materials 6 are formed of rovings or yarns of extremely fine fibre, of glass fibre, carbon fibre, Aramide fibre, molten silica fibre, multicomponent ceramic fibre (E glass, S glass) or quartz.

The resin 7 comprises a suitable heat-curable resin such as unsaturated polyester, epoxy, silicone or vinyl ester, heat-curable polyamide e.g. of bis-maleimide and triazine.

The resin layer 4 may be formed of the same or a different material, but comprises heat-curable or photo-curable resin, possibly heat resistant, and preferably having high Young's modulus. Examples are polyester resin or polyamide resin (nylon).

The resin layer 4 exhibits high adhesiveness to the heat-curable resin layer 7 of the reinforced coating layer 5 and a large break elongation.

The resin may comprise a thermosetting resin such as nylon, polycarbonate, polymethylmethacrylate (PMMA), polystyrene, or heat-curable and photo-curable (ultraviolet ray-curable) resin such as epoxy acrylic compound, silicone acrylic compound, urethane acrylic compound or copolymer of them.

The resin layer 4 is thinner than the reinforced coating layer 5, and the ratio in thickness of the resin layer 4 to the reinforced coating layer 5 is approximately 1:3 to 1:10.

In the coated optical fibre of Figure 1, the optical fibre 1 has core diameter/outer diameter of 50 μm/125 μm and outer diameter of the reinforced coating layer 5 of approximately 950 μm to 1 mm. The buffer layer 3 has a thickness of 200 μm or less, and a Young's modulus of 30 kg/mm$^2$ (Young's modulus value at ambient temperature. The Young's modulus values given herein will also be at ambient temperature) or higher. The resin layer 4 has a thickness of 50 μm or lower and a Young's modulus of 70 to 100 kg/mm$^2$.

In order to reduce improper external appearance such as scratches or burrs on the surface of the layer 5, ultrafine particles, generally called "a filler" are mixed in the coating layer 5.

In conventional examples, an inorganic filler such as calcium carbonate, or short glass fibre is mixed in the reinforced coating layer, to improve the external appearance, but the transmission characteristic decreases in the high temperature range at the time of moulding the reinforced coating layers (100 to 150°C).

Since the radial linear expansion coefficient of the reinforced coating layer is $5\times10^{-5}$ in the relative relationship between the buffer layer and the reinforced coating layer, while the primary coating layer and the buffer layer (e.g., silicone rubber) is $5\times10^{-4}$, the buffer layer exhibits more thermal expansion in the high temperature range. When the side pressure due to the expansion is applied to the optical fibre, the filler in the reinforced coating layer causes it to be irregular, with the result that the optical fibre undergoes a microbend due to irregular side pressure, thereby increasing the transmission loss.

Since the present coated optical fibre has the resin layer 4 interposed between the buffer layer 3 and the reinforced resin layer 5 as described above, this problem should be obviated.

The problem caused by the filler can also be eliminated by suitably setting the diameter of the particles of the filler, preferably also setting the quantity of the filler to that of the heat-curable resin 7.

The filler includes inorganic ultrafine particles and/or thermoplastic ultrafine particles.

When the filler is inorganic ultrafine particles, they may be one or more of calcium carbonate, talc, hydrated alumina, clay and zeolite.

The inorganic ultrafine particles have maximum particle diameter of 30 μm or less and mean particle diameter of 3.0 μm or less, and the ratio of the inorganic ultrafine particles is 25% or less by weight relative to the heat-curable resin 7.

The transmission characteristics and the moldability are thereby simultaneously improved, and in an example, a "good" result is obtained when the maximum particle diameter is 25 μm and the mean particle diameter is 3.0 μm, and "excellent" result is obtained when the maximum particle diameter is 10 μm and the mean particle diameter is 1.0 μm, and the "best" result is obtained when the mean particle diameter is 7.0 μm.

When the filler is formed of thermoplastic ultrafine particles, they may be one or more of polystyrene, polystyrene chloride, ABS resin and cellulose plastic, of particle diameter 5 to 50 μm, and a softening temperature of 120°C or less.

The ratio of the thermoplastic ultrafine particles in the reinforced coating layer 5 is preferably 25% or less by weight relative to the heat-curable resin 7.

When the thermoplastic ultrafine particles are mixed as a filler within the reinforced coating layer 5, the apparent viscosity of the heat-curable resin 7 increases through the softened ultrafine particles during moulding the reinforced coating layer 5. Thereby no external appearance problems of the reinforced coating layer 5 (such as a scratch or a burr due to the mould) occur. Since the ultrafine particles are plasticised, irregular side pressure which causes a microbend at the time of moulding at high temperature does not arise, and the coating layer 5 can be moulded while suppressing the light transmission loss of the optical fibre 1.

When the thermoplastic ultrafine particles in the reinforced coating layer 5 are formed of polystyrene having mean particle diameter of 30 μm and are mixed by 10% by weight to form the reinforced coating layer 5, almost no improper external appearance is exhibited on the surface of the layer 2, and increase in the light transmission loss remains within 0 to 0.5 dB/km.

The temperature of the drawing die used during moulding was 160 to 195°C, and the plasticising temperature of the thermoplastic ultrafine particles was 106°C.

In the following description, the particles of filler as defined above are always included in the reinforced coating layer, although this is not always explicitly specified.

The mechanical characteristics of the coated optical fibre measured by a crushing test will now be described.

In the crushing test samples of coated optical fibre having a length of 50 mm were produced, the sample was set by a crushing jig to an Instron tensile strength testing machine, and a side pressure crushing test was conducted at a speed of 0.5 mm/min.

The crushing point was judged by the maximum load point at which linearity is maintained in a load curve based on time lapse.

As a comparison a similar test was conducted with a conventional coated optical fibre within resin layer 4.

Conventional Example
a) Optical fibre 1

Made of Quartz, graded-index (GI) type, specific refractive index difference $\Delta=1\%$, and core/outer diameter=50 μm/125 μm.

b) Primary coating layer 2
None.

c) Buffer layer 3

Made of silicone rubber, Young's modulus=20 kg/mm², and outer diameter=400 μm.

d) Optical fibre 1 with buffer layer 3

Transmission loss=2.7 dB/km (wavelength>=0.85 μm).

e) Resin layer 4
None.

f) Reinforced resin layer 5

Outer diameter=950 μm, glass content rate=65 vol-%.

Reinforcing fibre material 6

Roving formed by gathering several hundreds of E glass fibre having outer diameter of approximately 10 μm.

Heat-curable resin 7

Unsaturated polyester.

In the conventional example of the above-described structure, the side pressure crushing strength was 1.0 to 1.5 kg/mm, and the transmission loss after forming the reinforced coated layer 5 was 4 to 5 dB/km.

Embodiment 1

The same as the conventional one in the above paragraphs a), b), c) and d).

However, the outer diameter in the above paragraph c) was 350 μm.

e) Resin layer 4

Urethane acrylic compound, Young's modulus=50 kg/mm².

Outer diameter=400 μm.

f) The same as the conventional one above

g) Relation to the layers 3 and 4

The buffer layer 3 and the resin layer 4 were isolated by an ultrafine gap, and the resin layer 4 and the reinforced coating layer 5 were bonded to each other.

In case of this embodiment 1, the side pressure crushing strength was increased as compared with the conventional example to 1.3 to 1.6 kg/mm, and the transmission loss after the coated layer 5 was formed was 3.0 dB/km or less, and, thus, considerably decreased.

Embodiment 2

The same as those of the embodiment 1 for the above paragraphs a) to g). However, the Young's modulus in the above paragraph e) was 75 kg/mm².

In embodiment 2, the side pressure crushing strength was improved as compared with the conventional example to 1.5 to 20 kg/mm, and the transmission loss after the coated layer 5 was formed was 3.0 dB/km or less.

Embodiment 3

The same as those of the embodiment 1 for the above paragraphs a) to g). However, the Young's modulus in the above paragraph e) was set to 95 kg/mm².

In embodiment 3, the side pressure crushing strength again improved over embodiment 2 to 2.5 to 2.8 kg/mm, and the light transmission loss after the coated layer 5 is formed was 3 dB/km or less.

Embodiment 4

The same as those of the embodiment 1 for the above paragraphs a) to g). However, the material in the above paragraph e) was epoxy acrylic compound having Young's modulus of 120 kg/mm².

In embodiment 4, the transmission loss after the coated layer 5 was formed was 3 dB/km or less, but the side pressure crushing strength was further increased to 3.0 to 3.3 kg/mm.

Embodiment 5

The same as those of the embodiment 1 for the above paragraphs a), b), c), d) and f). As to paragraph e), nylon 12 having an outer diameter of 400 μm was employed.

In this embodiment 5, the side pressure crushing strength was 2.0 to 2.8 kg/mm, but the transmission loss after the coated layer 5 was formed was 5 to 6 dB/km.

The reason is believed to be that the nylon resin layer 4 was thermally fusion-bonded locally to the inner surface of the coating layer 5, thereby producing ruggedness on the boundary surface between the layers 4 and 5, thereby producing a microbend, thereby increasing the transmission loss.

Embodiment 6

The same as those of the conventional example for the above paragraphs a), b), c) and d). However, the material for the above paragraph c) was silicone resin.

e) Resin layer 4

Made of unsaturated polyester, Young's modulus=100 kg/mm², and outer diameter=450 μm.

For the above paragraph f), the same as those in which the outer diameter=1.0 mm was set.

In embodiment 6, the side pressure crushing strength was 1.7 to 2.2 kg/mm, and the light transmission loss was 3 dB/km or less.

In embodiments 1 to 4, and 6, the reason why the transmission loss after the coating layer 5 was formed can be decreased to 3 dB/km or less, can be considered as below.

That is, since the reinforcing fibre material 6 is prevented by the resin layer 4 from contacting directly with the buffer layer 3 in a random manner, irregular side pressure exceeding the absorption capacity of the buffer layer 3 is not produced, thereby holding the low transmission loss state of the optical fibre 1.

The Young's modulus of the resin layer 4 may be more than twice that of the buffer layer 3.

The foregoing embodiments have been described for an optical fibre disposed within the coating layer 5. However, the resin layer 4 may be disposed within the coating layer 5, and a plurality of optical fibres with buffer layers may be disposed inside the layer 5.

A general method of producing a coated optical fibre as described above, comprises the steps of impregnating a reinforcing fibre material made of rovings or yarns of extremely fine fibre with liquid heat-curable resin; longitudinally attached with the reinforcing fibre material impregnated with the resin along the periphery of the optical fibre strand (which is an optical fibre with a buffer layer), and drawing them through a heating type drawing mould to thereby cure the resin. The optical fibre strand should be covered without eccentricity. If the degree of eccentricity is large, the transmission loss increases, or the protecting effect on the optical fibre strand against crushing or bending decreases.

In order to alleviate these problems, the amount of reinforcing fibre material should be increased, and the optical fibre strand should be enclosed within many reinforcing fibres. Thus, the degree of eccentricity can be reduced, and the transmission characteristic, temperature characteristic and mechanical characteristics are improved. However, as the amount of reinforced fibre material increases, the drawing resistance in the drawing mould increases, with the result that breakage of fibre is caused, thereby leading to improper flexibility, irregular impregnation of the resin, and improper external appearance.

To overcome these problems, in the present coated optical fibre, the volumetric ratio C of A to B, i.e., $C=(B/A+B)\times100$ is set to $45\leqq C\leqq75$, where A is the quantity of the heat-curable resin 7, and B is the quantity of the reinforced fibre materials 6. Further, the ratio Dr of the outer diameters $d_1$ to $d_2$, i.e. $Dr=(d_2/d_1)\times100$ is set to $0<Dr<6$, where $d_1$ is the outer diameter of the optical fibre strand (the outer diameter of the buffer layer 3), $d_2$ is the mean diameter of the extremely fine fibres 6'.

The reasons of setting $45\leqq C\leqq75$ and $0<Dr<6$ will now be described.

Of $C\leqq75$, when C exceeds 75% by volume,

excessive reinforcing fibre is present with the result of breakage of fibre at drawing time, improper flexibility, irregular impregnation of the resin, and/or improper external appearance occur.

Accordingly, the upper limit value of the C is 75% by volume.

Of $45\leqq C$, when C decreases lower than 45% by volume, an eccentricity of the optical fibre strand, an increase in the transmission loss, a decrease in the temperature characteristic and a decrease in the mechanical characteristics, caused by the excessive resin (on the contrary, lack of fibre) occur as described above.

Accordingly, the lower limit value of the C is 45% by volume.

It is not only $45\leqq C\leqq75$ as described above that are needed to satisfy the requirement.

For example, when the respective reinforcing fibre materials 6, as rovings and impregnated with the resin are introduced into the drawing mould while enclosing the optical fibre strand, the reinforcing fibre materials 6, are opened, and the extremely fine fibres 6' exist at random in the reinforced coating layer 5. Where the diameter of the extremely fine fibre 6' is large when $45\leqq C\leqq75$, the number of the fibres 6' as the component unit of the reinforcing fibre material 6 becomes less, and the effect of enclosing the optical fibre strand diminishes.

On the other hand, the thermosetting resin 7 in liquid uncured state impregnated into the respective reinforcing fibre materials 6, is adhered to the surfaces of the fibres 6', and carried to the drawing mould. Thus, the quantity of carried resin is determined depending upon the total surface areas of the fibres 6'. When the diameter of the fibres 6' is large and the number of the fibres 6' is less, the total surface area becomes small, thereby reducing the resin carrying quantity.

As a result, the setting of $45\leqq C\leqq75$ may become difficult.

Therefore, with respect to the extremely fine fibres 6, $0<Dr<6$ should be satisfied as described above, and the above-described problems arise if Dr exceeds 6.

According to experimental examples, coated optical fibres falling within the aforementioned range of the set values exhibited desired results of moldability, transmission characteristic, temperature characteristic, presence or absence of eccentricity. However, coated optical which were out of the aforementioned range of the set values exhibited one or more problems of improper moldability, an increase in the transmission loss, improper temperature characteristics, eccentricity.

Preferred values are $C=60$ and $Dr=3.5$ and in this case the optical fibre exhibited preferably results not only in mechanical properties but also in flexibility.

In the aforementioned $C=(B/A+B)\times100$, when the filler is thermoplastic ultrafine particles, the particles are contained in A, and when the filler is formed of the inorganic ultrafine particles, they are contained in B.

It is preferable that the optical fibre with buffer layer, have 0.01 to 0.10% of tensile distortion, since the optical fibre strands have tensile distortion in the reinforced coating layer, and thereby compression distortion causing the microbend seldom arises. Even if the reinforced coating layer is not accordingly contracted due to the variations in the external force and the temperature, an increase in the transmission loss of the optical fibre does not occur.

An example of fabricating a coated optical fibre will now be described with reference to Figures 4 and 5.

In Figure 4, an optical fibre 1 with buffer layer 3 is supplied from a supplying machine 8, passed through an impregnation tank 9, where liquid resin to form the resin layer 4 is uniformly adhered on the outer periphery of the buffer layer 3. Reinforcing fibre materials 6 in roving state are supplied from other supplying machines 10 to pass through impregnation tanks 11, where the materials 6 are impregnated with liquid-state heat-curable resin 7.

The resin is adhered and impregnated on the optical fibre 1 and the respective reinforcing fibre materials 6, which are, in turn, passed through a comber board 12, to join them. Then, the materials are passed through a drawing mould 13 having a heating furnace and a curing furnace 14 to form a predetermined resin layer 4 and a reinforced coating layer 5. The coated fibre thus manufactured is drawn by a drawing machine 15, and then wound by a winding machine 16.

The example of Figure 5 is substantially similar to that in Figure 4, but differs at the point that, after liquid resin for the resin layer 4 is adhered to the outer periphery of the buffer layer 3, the optical fibre 13 with the liquid-state resin 4 is passed through a curing furnace 17 to retain the shape of the resin 4.

In an alternative, the resin layer 4 is formed on the outer periphery of the optical fibre 1 in another step, and the tank 9 is described in Figures 4 and 5 may be omitted.

In the embodiments shown in Figures 4 and 5, a preliminary heating furnace (not shown), may be disposed between the impregnation tank 11 and the comber board 12, and the resin 7 on the surface of the reinforcing fibre material 6 may be preliminarily cured.

In this case, the period of heating to cure the resin in the drawing mould 13 may be shortened, thereby increasing the drawing and moulding velocity.

As regards mixing of the filler in the reinforced coating layer 5, said filler is stirred to mix the predetermined ultrafine particles in the respective tanks 11.

The resin layer 4 has an adhesiveness to the reinforced coating layer 5, and the resin layer 4 is thermally expanded in the furnace 14, and the layers 4 and 5 are bonded one to the other in this state.

After the reinforced resin layer 5 is cured, the respective layers cool and contract, but the bonding between the resin layer 4 and the coating layer 5 is maintained, while the buffer layer 3 and the resin layer 4 are isolated from one another due to the difference of the thermal expansion coefficient therebetween.

In the foregoing description, the term "outer diameter" means "diameter".

Since the coated optical fibre has high transmission characteristics, it is mainly used for communication purposes, and since the optical fibre has particularly excellent mechanical properties and temperature characteristics, it is adapted for optical fibre core wire for underground buried communication cables, aerial inner optical cables, power and photo composite cables.

## Claims

1. A coated optical fibre comprising an optical fibre (1), a buffer layer (3) thereon, an externally disposed reinforced coating layer (5) of heat cured resin (7) containing reinforcing fibre materials (6), and an additional resin layer (4) devoid of reinforcing fibre materials interposed between said buffer layer (3) and said reinforced coating layer (5), characterised in that said additional resin layer (4) is bonded to said reinforced coating layer (5), and in that said reinforced coating layer (5) also comprises particles of a filler, which are composed of an inorganic material and have a diameter of less than 30 μm, or are composed of a thermoplastic material having a softening temperature of 120°C or less and have a diameter of less than 50 μm.

2. A coated optical fibre as claimed in claim 1, characterised in that said additional resin layer (4) is formed of heat or light cured resin.

## Patentansprüche

1. Beschichtete optische Faser, enthaltend eine optische Faser (1), eine Pufferschicht (3) darauf, eine außerhalb davon angeordnete armierte Schicht (5) aus wärmegehärtetem Material (7), die Armierungsfasermaterialien (6) enthält, und eine zusätzliche Harzschicht (4), die frei von Armierungsfasermaterialien ist und die zwischen der Pufferschicht (3) und der armierten Schicht (5) liegt, dadurch gekennzeichnet, daß die zusätzliche Harzschicht (4) mit der armierten Schicht (5) verklebt ist und daß die armierte Schicht (5) außerdem Partikel eines Füllmaterials enthält, die aus einem anorganischen Material bestehen und einen Durchmesser von weniger als 30 μm haben oder aus einem thermoplastischen Material bestehen, das eine Erweichungstemperatur von 120°C oder weniger aufweist und die einen Durchmesser von weniger als 50 μm haben.

2. Beschichtete optische Faser nach Anspruch 1, dadurch gekennzeichnet, daß die genannte zusätzliche Harzschicht (4) aus einem hitze- oder lichtgehärteten Harz besteht.

## Revendications

1. Une fibre optique revêtue comprenant une fibre optique (1), une couche tampon (3) pardessus cette fibre, une couche de revêtement renforcée (5) disposée extérieurement en résine thermodurcie (7) contenant des matériaux fibreux de renforcement (6) et une couche de résine additionnelle (4) dépourvue de matériaux fibreux de renforcement interposée entre ladite couche tampon (3) et ladite couche de revêtement renforcée (5), caractérisée en ce que ladite couche de résine additionnelle (4) est liée à ladite couche de revêtement renforcée (5), et en ce que ladite couche de revêtement renforcée (5) comprend également des particules d'une charge de remplissage, qui sont composées d'un matériau minéral et ont un diamètre inférieur à 30 µm, ou bien qui sont composées d'un matériau thermoplastique ayant une température de ramollissement de 120°C ou moins et qui ont un diamètre inférieur à 50 µm.

2. Une fibre optique revêtue selon la revendication 1, caractérisée en ce que ladite couche de résine additionnelle (4) est formée de résine durcie par la chaleur ou par la lumière.

Fig. 3

Fig. 2

Fig. 1

Fig. 4

Fig. 5